# EUROPEAN PATENT SPECIFICATION

(11) **EP 2 233 647 B1**
(45) Date of publication and mention of the grant of the patent: **30.07.2014**
(21) Application number: 08860222.2
(22) Date of filing: 08.12.2008
(51) Int. Cl.: E02F 9/24, B60R 1/00, E02F 9/26, E02F 9/20

(54) **CONSTRUCTION MACHINE**
BAUMASCHINE
ENGIN DE CHANTIER

(30) Priority: 10.12.2007 JP 2007318692
(43) Date of publication of application: 29.09.2010
(73) Proprietor: Hitachi Construction Machinery Co., Ltd, Tokyo 112-0004 (JP)
(72) Inventor: ARIGA, Nobuei, Tsuchiura-shi Ibaraki 300-0013 (JP); TSUKADA, Hidenobu, Tsuchiura-shi Ibaraki 300-0013 (JP)
(74) Representative: Hatzmann, Martin
(86) International application number: PCT/JP2008/072265
(87) International publication number: WO 2009/075251

(56) References cited:
- WO-A1-2006/106685
- JP-A- 8 160 127
- JP-A- 2002 327 469
- JP-A- 2005 138 720
- JP-A- 2007 046 241
- JP-A- 2007 056 679

## Description

### Technical Field

This invention relates to a construction machine such as a hydraulic excavator, in which monitoring around a machine body by a monitor camera and start control of a prime mover are associated with each other.

### Background Art

Conventional technologies that associate monitoring around a vehicle or machine body with start control of a prime mover include, for example, one disclosed in Patent Document 1. According to this conventional technology, the capturing of an image underneath a vehicle is performed when an engine start signal is outputted. In accordance with the captured image, it is automatically determined by a subtraction operation whether or not there is any obstruction underneath the vehicle. If any obstruction is determined to exist, processing is performed to prohibit starting of an engine.
Patent Document 1: JP-A-2005-138720

### Disclosure of the Invention

### Problem to Be Solved by the Invention

The above-mentioned conventional technology prohibits starting of the engine if any obstruction is determined to exist underneath the vehicle body, and therefore, can be hardly applied to construction machines. In the case of a construction machine, for example, a hydraulic excavator that performs digging work of earth and sand or like work, an operation or operations to rotate a revolving upperstructure, to change the spatial position of a front working mechanism and/or to drive a travel base is needed to avoid obstruction upon starting work if the obstruction exists around a machine body. If starting of an engine is prohibited as in the above-mentioned conventional technology when obstruction is determined to exist, it is, therefore, no longer possible to perform such an operation or operations to avoid the obstruction, thereby making it impossible to start work. In a work site where a hydraulic excavator is used, it is common that various materials are piled or earth and sand or the like is laid in heaps around the hydraulic excavator. If these materials, earth and sand, or the like is determined to be obstruction as in the conventional technology upon starting work, starting of an engine is prohibited so that the work cannot be started. An application of the above-mentioned conventional technology to a construction machine results in the prohibition of starting of an engine when obstruction is found by monitoring, and therefore, involves a problem that no work can be performed by the construction machine in such a situation.

With the above-mentioned situation of the conventional technology in view, the present invention has as an object thereof the provision of a construction machine, which can surely perform the confirmation of conditions aroundamachine body upon starting work and can start a prime mover even when obstruction exists around the machine body.

### Means for Solving the Problem

To achieve this object, the present invention provides a construction machine provided with a prime mover, a working mechanism actuatable by a drive of the prime mover, a prime-mover start instruction device for outputting a start instruction signal to enable starting of the prime mover, a machine information detection means for detecting predetermined machine information and outputting a detection signal, a monitor camera for monitoring around a machine body and outputting peripheral image information as video signals, and a monitor capable of selectively displaying the machine information and peripheral image information based on the detection signal outputted from the machine information detection means and the video signals outputted from the monitor camera, characterized by a picture display control means for displaying the peripheral image information as a picture on the monitor for a predetermined set time after the start instruction signal is out putted from the prime-mover start instruction device, and a prime-mover start delay means for delaying starting of the prime mover for the set time.

According to the present invention constructed as described above, when the prime-mover start instruction device is manipulated upon staring work by the working mechanism, a start instruction signal is outputted from the prime-mover start instruction device. Responsive to this start instruction signal, the picture display control means displays peripheral image information, which is based on video signals from the monitor camera monitoring around the machine body, as a picture on the monitor for the predetermined set time after the start instruction signal is outputted from the prime-mover start instruction device. As a result, an operator of the construction machine can confirm the existence/non-existence of any obstruction around the machine body and, if there is obstruction, the operator becomes aware that the work should be started after an operation or operations are performed to avoid the obstruction. During the above-mentioned set time, the starting of the prime mover is delayed by the prime-mover start delay means. After the set time has elapsed subsequent to finishing the confirmation of any obstruction around the machine body by the operator, starting of the prime mover becomes feasible. Accordingly, if obstruction exists, an operation or operations of the construction machine can be performed to avoid the obstruction and the working mechanism can then be actuated by a drive of the prime mover. It is, therefore, possible to perform predetermined work by the working mechanism even when there is obstruction around the machine body.

As is appreciated from the foregoing, the present invention makes it possible to surely perform, upon starting work, the confirmation of conditions around the machine body based on peripheral image information displayed on the monitor by the image display control means and, even when obstruction exists around the machine body, also makes it possible to start the prime mover upon elapse of the set time subsequent to the output of a start instruction signal from the prime-mover start instruction device.

In the present invention described above, the picture display control means may comprise a picture switch means for switching a picture of the monitor to the picture of peripheral image information based on the start instruction signal outputted from the prime-mover start instruction device; and the prime-mover start delay means may comprise a storage means for storing the set time beforehand, a picture display time discrimination means for discriminating whether or not a display time of the picture of peripheral image information displayed on the monitor has reached the set time stored in the storage means, and a prime-mover start control means for controlling the prime mover to remain disabled to start based on the start instruction signal outputted from the prime-mover start instruction device and controlling to enable starting of the prime mover when the display time of the picture of peripheral picture information on the monitor is discriminated to have reached the set time stored in the storage means.

According to the present invention constructed as described above, when a start instruction signal is outputted from the prime-mover start instruction device, the prime mover is controlled to remain disabled to start by the prime-mover start control means of the prime-mover start delay means, and further, the picture switch means switches a picture of the monitor to a picture of peripheral image information based on the start instruction signal. This picture of peripheral image information remains displayed until a display time of the picture of peripheral image information is discriminated by the picture display time discrimination means of the prime-mover start delay means to have reached the set time stored in the storage means. By watching the picture of peripheral image information on the monitor, the operator of the construction machine can hence confirm whether or not any obstruction exists around the machine body. When the display time of the picture of peripheral imager information is discriminated by the picture display time discrimination means of the prime-mover start delay means to have reached the set time, the picture of the monitor is switched, for example, by the picture switch means to a normal picture that selectively shows machine information and peripheral image information, and further, the starting of the prime mover becomes feasible by the prime-mover start control means of the prime-mover start delay means irrespective of whether or not there is any obstruction around the machine body.

In the present invention described above, the construction machine may comprise a hydraulic excavator. If materials, earth and sand, or the like around the machine body at the time of starting of work by the hydraulic excavator lie as obstruction, the present invention constructed as described above can perform the confirmation of the obstruction and a response operation or operations to avoid the obstruction, and therefore, can perform desired work.

### Advantageous Effects of the Invention

Owing to the arrangement of the picture display control means for displayingperipheral image information as a picture on the monitor for the predetermined set time after a start instruction signal is outputted from the prime-mover start instruction device and also the prime-mover start delay means for delaying starting of the prime mover for the set time, the present invention can surely perform, upon starting work, the confirmation of conditions around the machine body by the peripheral image information on the screen of the monitor the display of which is controlled by the picture display control means. It is, therefore, possible to realize the assurance of safety at the time of starting work, and after delaying processing of starting of the prime mover by the prime-mover start delay means, also to start the prime mover even when obstruction exists around the machine body. As a consequence, all work required to be performed by the construction machine, including the performance of an operation or operations for the avoidance of the obstruction, can be performed, thereby making it possible to assure excellent workability which has been hardly achievable by the conventional technology.

### Best Mode for Carrying out the Invention

A best mode for carrying out the construction machine according to the present invention will hereinafter be described based on drawings.

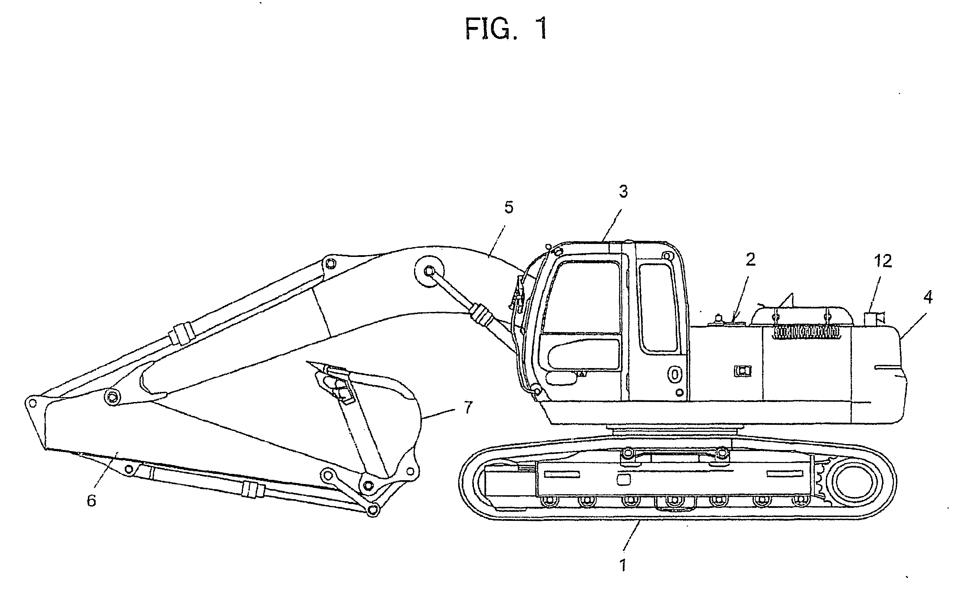

FIG. 1 is a side view illustrating a hydraulic excavator that constitutes one embodiment of the construction machine according to the present invention. As illustrated in FIG. 1, the construction machine according to this embodiment is the hydraulic excavator as an example, and is provided with a travel base 1 and a revolving upperstructure 2 mounted on the travel base 1. On the revolving upperstructure 2, an operator's cab 3 is arranged at a forward position while a counterweight 4 for assuring a balance in weight is arranged at a rearward position. To a forward position of the revolving upperstructure 2, a front working mechanism useful for the digging of earth and sand or like work is attached. This front working mechanism includes, for example, a boom 5 securedpivotally in an up-to-down direction to the revolving upperstructure 2, an arm 6 connected pivotally in an up-to-down direction to a free end of the boom 5, and a bucket 7 secured pivotally in an up-to-down direction to a free end of the arm 6.

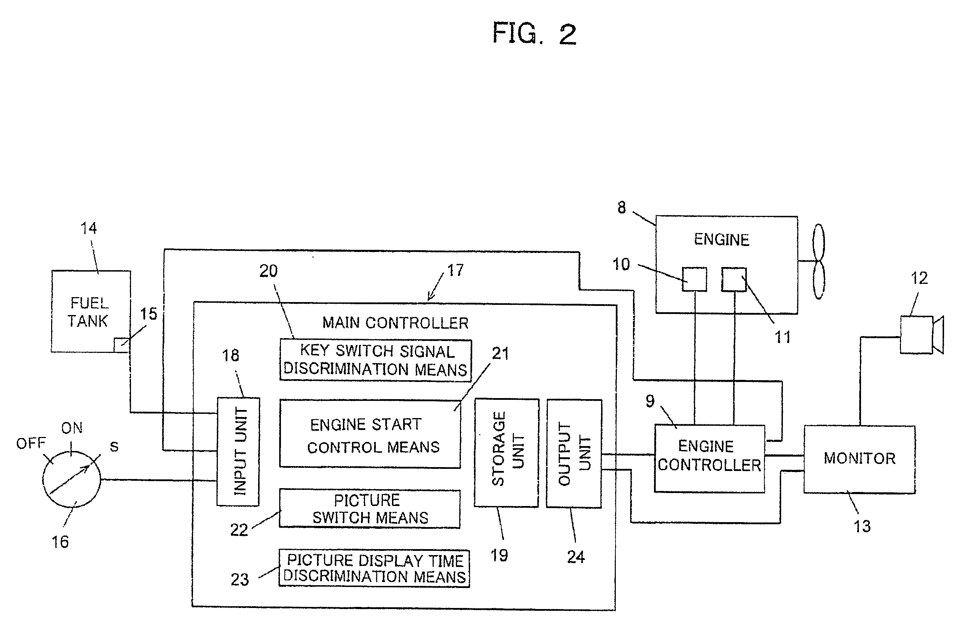

FIG. 2 is a block diagram showing the construction of essential parts of this embodiment. The above-described hydraulic excavator illustrated in FIG. 1 is provided, as showninFIG. 2, with a primem over for driving an unillustrated hydraulic pump that delivers hydraulic pressure to drive the above-mentioned front working mechanism or the like, in other words, an engine 8 and an engine controller 9 for controlling a drive of the engine 8. The engine 8 is further provided, in addition to a fuel injection pump 10 for injecting fuel to drive the engine 8, with an engine coolant temperature sensor 11 for detecting a temperature of engine coolant. Also provided are a monitor camera 12 arranged on an upper part of the above-mentioned counterweight 4 illustrated in FIG. 1 for monitoring around the machine body and outputting peripheral image information as video signals, and a monitor 13 arranged in the operator' s cab 3 and capable of displaying peripheral image information based on the video signals outputted from the monitor camera 12.

As shown by way of example in FIG. 2, a fuel tank 14 and a residual quantity sensor 15 for detecting the residual quantity of fuel in the fuel tank 14 are also provided. The residual quantity sensor 15, the above-mentioned engine coolant temperature sensor 11, and the like constitute the machine information detection means that detects operation information on the hydraulic excavator, that is, machine information. It is to be noted that the above-mentioned machine information and the above-mentionedperipheral image information can be selectively displayed as a normal picture on the monitor 13. For example, it is possible to selectively display both of the machine information and peripheral image information or only the machine information.

As also shown in FIG. 2, a prime-mover start instruction device, for example, an engine key switch device 16 is also provided. This engine key switch device 16 is equipped with a plurality of switch positions, for example, an OFF position for stopping a drive of the engine 8, an ON position for holding the engine 8 in a drivable standby state, and an S position, namely, start position for starting the engine 8.

This embodiment is provided especially with a picture display means for displaying, for example, only peripheral image information as a picture based on video signals from the monitor camera 12 instead of the above-mentioned normal picture for the predetermined set time after a start instruction signal, specifically ON signal is outputted from the prime-mover start instruction device, that is, the engine key switch device 16 and also with the prime-mover start delay means for delaying starting of the engine 8 for the above-mentioned set time, specifically an engine start delay means. These picture displaymeans and engine start delaying means are included as components in a main controller 17 to be described subsequently herein. It is to be noted that the above-mentioned set time is set at such a time that the operator in the operator's cab 3 can recognize peripheral image information of the hydraulic excavator, for example, information on a rearward field of vision by watching a picture of peripheral image information displayed on the monitor 13 based on video signals from the monitor camera 12.

The above-mentioned main controller 17 is provided, as shown in FIG. 2, with an input unit 18, a key switch signal discrimination means 20 and an output unit 24. The input unit 18 inputs detection signals outputted from the engine coolant temperature sensor 11, the residual quantity sensor 15 and the like, and also, an ON signal or the like outputted from the engine key switch device 16. The key switch signal discrimination means 20 discriminates whether or not the ON signal has been inputted from the engine key switch device 16. The output unit 24 outputs a signal, which corresponds to the results of processing at the main controller 17, to the engine controller 9 or monitor 13.

This controller 17 is provided with a picture switch means 22 included in the above-mentioned picture display control means. Based on the ON signal outputted from the engine key switch 16, this picture switch means 22 switches the picture of the monitor 13 to a picture that shows only peripheral image information based on video signals from the monitor camera 12.

This controller 17 is also provided with the memory mean, specifically a storage unit 19, a picture display time discrimination means 23, and the prime-mover start control means, specifically an engine start control means 21, all of which are included in the above-mentioned engine start delay means. The storage unit 19 stores the above-mentioned set time beforehand. The picture display time discriminationmeans 23 discriminates whether or not a display time of the picture of peripheral image information displayed on the monitor 13 has reached the set time stored in the storage unit 19. The engine start controlmeans 21 controls the engine 8 to remain disabled to start based on the ON signal outputted from the engine key switch 16, and also controls to enable starting of the engine 8 when the display time of the picture of peripheral picture information on the monitor 13 is discriminated by the picture display time discrimination means 23 to have reached the set time stored in the storage unit 19.

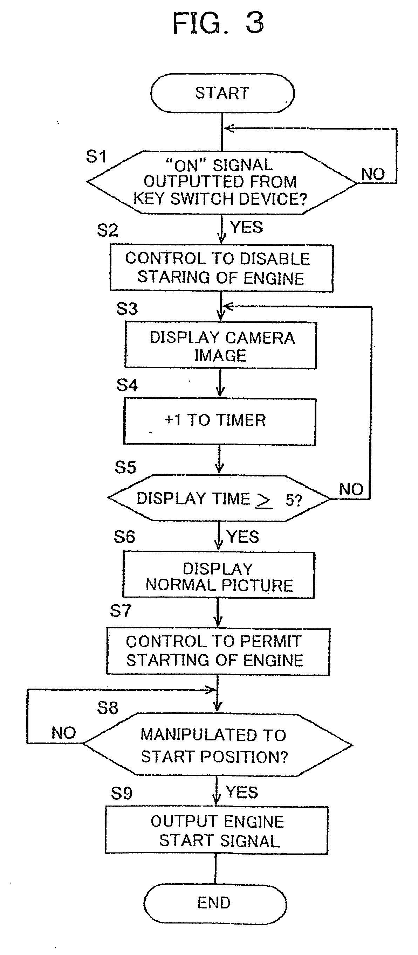

A description will hereinafter be made about operations of this embodiment, including processing operations to be performed at the main controller 17. FIG. 3 is a flow chart illustrating processing steps at the main controller included in the construction of essential parts shown in FIG. 2. It is to be noted that processing is performed beforehand to store "5" as a set time in the storage unit 19 of the main controller 17.

When the engine key switch device 16 is manipulated from the OFF position to, for example, the ON position upon starting work by the above-mentioned front working mechanism, a start instruction signal, specifically an ON signal is outputted from this engine key switch device 16.

At the key switch signal discrimination means 20 in the main controller 17, it is discriminated, as illustrated in step S1 of FIG. 3, whether or not the ON signal from the engine key switch device 16 has been inputted. Now assuming that the ON signal has been inputted, the routine advances to step S2.

In this step S2, the engine 8 is controlled to temporarily remain disabled to start by the engine start control means 21 included in the engine start delay means. The routine then advances to step S3.

Instep S3, processing is performed by the picture switch means 22, which is included in the picture display control means, to switch the picture of the monitor 13 to a picture that shows, for example, peripheral image information based on video signals from the monitor camera 12. The routine then advances to step S4.

In step S4, processing is performed to add "1", which corresponds to a unit time upon conducting measurements, to a timer included in the main controller 17. The routine then advances to step S5.

In step S5, a discrimination is performed by the picture display time discrimination means 23 included in the engine start delay means as to whether or not a display time of the picture of peripheral image information on the monitor 13, said display time being an integrated value of the unit time as measured by the timer, has reached "5" or greater. If this discrimination results in "NO", the routine returns to step S3, and the picture of peripheral image information remains displayed on the monitor 13. By watching the picture of peripheral image information on the monitor 13, the operator in the operator's cab 3 can, therefore, confirm whether or not there is any obstruction around, especially rearward of the hydraulic excavator. Even if the operator' s hand or the like accidentally comes into contact with a control device for the front working mechanism, a control device for the travel base 1 or a control device for the revolving upperstructure 2 in the operator's cab during the above-mentioned step, the hydraulic excavator is maintained safe without operation because the engine 8 is controlled to remain in the stopped state.

If the discrimination in the above-mentioned step S5 results in "YES", in other words, if the display time of the picture of peripheral image information as measured by the timer is discriminated by the picture display time discrimination means 23 to have reached the time "5" stored in the storage unit 19, the routine then advances to step S6.

In step 6, processing is performed by the picture switch means 22 to switch the picture of the monitor 13 from the picture of peripheral image information to the normal picture. As a result, the picture of the monitor 13 is switched, for example, to a picture that shows both of machine information based on a detection signals of the engine coolant temperature sensor 11 and residual quantity sensor 15 arranged in the fuel tank 14 and the above-mentioned peripheral image information based on the video signals from the monitor camera 12. The routine then advances to step S7.

In step S7, engine start permission control is performed, specifically the engine 8 is controlled by the engine start control means 21 into a state in which its starting is enabled. The routine then advances to step S8.

In step S8, it is discriminated at the main controller 17 whether or not the engine key switch device 16 shown in FIG. 2 has been manipulated to the start position (S position). Now assuming, for example, that the engine key switch device 16 is in the state that it has been manipulated to the ON position, the discrimination in step S6 results in "NO", and therefore, the engine 8 is controlled to remain in a standby state in which the engine 8 can start. When the engine key switch device 16 is manipulated from such a state to the start position, the discrimination in this step S8 results in "YES", and then, the routine advances to step S9.

In step S9, processing is performed to output an engine start signal to the engine controller 9 via the output unit 24. As a result, a drive signal is outputted from the engine controller 9 to the fuel injector 10 so that the engine 8 starts.

It is, therefore, possible, for example, to immediately perform desired digging work or the like by driving the front working mechanism when the existence of obstruction is not recognized in the picture of peripheral image information on the monitor 13. When the existence of obstruction is recognized in the picture of peripheral image information on the monitor 13, on the other hand, the desired work can be performed after an appropriate operation or operations to avoid the obstruction such as driving of the travel base 1, rotation of the revolving upperstructure 2 and/or changing of the spatial position of the front working mechanism is performed. When the engine key switch device 16 is manipulated back to the OFF position after the completion of the work, the engine 8 stops.

In the foregoing, the description was made about the case in which upon starting the work, the engine key switch device 16 was manipulated to the ON position. The engine key switch device 16 may, however, be manipulated to the start position (S position). If manipulated to the start position as mentioned above, the discrimination in step S8 of FIG. 3 results in "YES" and the routine immediately advances to step S9. Therefore, the above-mentioned engine start signal is outputted to the engine controller 9, whereby the above-mentioned respective operations become feasible.

According to this embodiment constructed as described above, there are provided the picture display control means including the picture switch means 22 for displaying peripheral image information as a picture on the monitor 13 for the predetermined set time after a start instruction signal, specifically an ON signal is outputted as a result of a manipulation of the engine key switch device 16; and also the engine start delay means including the storage unit 19, picture display time discrimination means 23 and engine start control means 21 for delaying starting of the engine 8 for the set time. Upon starting work, it is, therefore, possible to surely perform the confirmation of conditions around the machine body by the peripheral image information in the picture of the monitor device 13 as switched by the picture switchmeans 22, and to realize the assurance of safety at the time of starting the work. After completion of the processing that delays the starting of the engine 8 by the engine start delay means, the starting of the prime mover becomes feasible even when obstruction exists around the construction body. As a consequence, all work required to be performed by the hydraulic excavator, including the performance of an operation or operations for the avoidance of the obstruction, can be performed, thereby making it possible to assure excellent workability.

### Brief Description of the Drawings

[FIG. 1] A side view illustrating a hydraulic excavator constituting one embodiment of the construction machine according to the present invention.
[FIG. 2] A block diagram showing the construction of essential parts of the embodiment.
[FIG. 3] A flow chart illustrating processing steps at a main controller included in the construction of essential parts as shown in FIG. 2.

### Legend

- 1: Travel base
- 2: Revolving upperstructure
- 3: Operator's cab
- 4: Counterweight
- 5: Boom
- 6: Arm
- 7: Bucket
- 8: Engine (prime mover)
- 9: Engine controller
- 10: Fuel injector
- 11: Engine coolant temperature sensor (Machine information detection means)
- 12: Monitor camera
- 13: Monitor
- 14: Fuel tank
- 15: Residual quantity sensor (Machine information detection means)
- 16: Engine key switch device (Prime-mover start instruction device)
- 17: Main controller
- 18: Input unit
- 19: Storage unit (storage means)
- 20: Key switch signal discrimination means
- 21: Engine start control means (Prime-mover start control means)
- 22: Picture switch means
- 23: Image display time discrimination means
- 24: Output unit

## Claims

1. A construction machine provided with a prime mover (8), a working mechanism (5, 6, 7) actuatable by a drive of the prime mover, a prime-mover start instruction device (16) for outputting a start instruction signal to enable starting of the prime mover, a machine information detection means (11, 15) for detecting predetermined machine information and outputting a detection signal, a monitor camera (12) for monitoring around a machine body and outputting peripheral image information as video signals, and a monitor (13) capable of selectively displaying the machine information and peripheral image information based on the detection signal outputted from the machine information detection means and the video signals outputted from the monitor camera, **characterized by**:
a picture display control means for displaying the peripheral image information as a picture on the monitor (13) for a predetermined set time after the start instruction signal is outputted from the prime-mover start instruction device (16); and
a prime-mover start delay means for delaying starting of the prime mover (8) for the set time.

2. The construction machine according to claim 1, wherein:
the picture display control means comprises a picture switch means (22) for switching a picture of the monitor (13) to the picture of peripheral image information based on the start instruction signal outputted from the prime-mover start instruction device (16); and
the prime-mover start delay means comprises:
astoragemeans (19) for storing the set time beforehand,
a picture display time discrimination means (23) for discriminating whether or not a display time of the picture of peripheral image information displayed on the monitor has reached the set time stored in the storage means, and
a prime-mover start control means (21) for controlling the prime mover to remain disabled to start based on the start instruction signal outputted from the prime-mover start instruction device (16) and controlling to enable starting of the prime mover when the display time of the picture of peripheral picture information on the monitor (13) is discriminated to have reached the set time stored in the storage means (19).

3. The construction machine according to claim 1 or 2, which comprises a hydraulic excavator.

## Patentansprüche

1. Baumaschine, die mit einer Antriebsmaschine (8), einem Arbeitsmechanismus (5, 6, 7), der mit einem Antrieb durch die Antriebsmaschine betätigbar ist, einer Antriebsmaschinenstart-Befehlseinrichtung (16) zum Ausgeben eines Startbefehlssignals zur Ermöglichung eines Startens der Antriebsmaschine, einem Maschineninformations-Erfassungsmittel (11, 15) zum Erfassen vorbestimmter Maschineninformationen und zum Ausgeben eines Erfassungssignals, einer Überwachungskamera (12) zum Überwachen einer Umgebung um einen Maschinenkörper und zum Ausgeben von Umgebungsbildinformationen als Videosignale, und einem Bildschirm (13), der dazu fähig ist, die Maschineninformationen und die Umgebungsbildinformationen selektiv auf der Grundlage des von dem Maschineninformations-Erfassungsmittel ausgegebenen Erfassungssignals und der von der Überwachungskamera ausgegebenen Videosignale anzuzeigen, ausgerüstet ist, **gekennzeichnet durch**:
ein Bildanzeigesteuerungsmittel zum Anzeigen der Umgebungsbildinformationen als ein Bild auf dem Bildschirm (13) über eine vorbestimmte Einstellzeit nachdem das Startbefehlssignals von der Antriebsmaschinenstart-Befehlseinrichtung (16) ausgegeben ist; und
ein Antriebsmaschinenstart-Verzögerungsmittel zum Verzögern eines Startens der Antriebsmaschine (8) für die Einstellzeit.

2. Baumaschine gemäß Anspruch 1, wobei:
das Bildanzeigesteuerungsmittel ein Bildumschaltmittel (22) zum Umschalten eines Bilds des Bildschirms (13) auf das Bild der Umgebungsbildinformationen auf der Grundlage des von der Antriebsmaschinenstart-Befehlseinrichtung (16) ausgegebenen Startbefehlssignals umfasst; und
das Antriebsmaschinenstart-Verzögerungsmittel umfasst:
ein Speichermittel (19) zum Speichern der Einstellzeit im Voraus,
ein Bildanzeigezeit-Unterscheidungsmittel (23) zum Unterscheiden, ob eine Anzeigezeit des auf dem Bildschirm angezeigten Bilds der Umgebungsbildinformationen die in dem Speichermittel gespeicherte Einstellzeit erreicht hat oder nicht, und
ein Antriebsmaschinenstart-Steuerungsmittel (21) zum Steuern, dass das Starten der Antriebsmaschine auf der Grundlage des von der Antriebsmaschinenstart-Befehlseinrichtung (16) ausgegebenen Startbefehlssignals gesperrt bleibt, und zum Steuern, dass ein Starten der Antriebsmaschine freigegeben wird, wenn festgestellt wird, dass die Anzeigezeit des Bilds der Umgebungsbildinformationen auf dem Bildschirm (13) die in dem Speichermittel (19) gespeicherte Einstellzeit erreicht hat.

3. Baumaschine gemäß Anspruch 1 oder 2, die einen Hydraulikbagger umfasst.

## Revendications

1. Engin de chantier pourvu d'un moteur principal (8), d'un mécanisme de travail (5, 6, 7) pouvant être actionné par un entraînement du moteur principal, un dispositif d'instruction de démarrage de moteur principal (16) pour délivrer un signal d'instruction de démarrage pour permettre le démarrage du moteur principal, un moyen de détection d'information de machine (11, 15) pour détecter une information de machine prédéterminée et pour délivrer un signal de détection, une caméra de surveillance (12) pour surveiller les abords d'une carrosserie d'engin et délivrer une information d'image périphérique sous forme de signaux vidéo, et un moniteur (13) capable d'afficher sélectivement l'information de machine et une information d'image périphérique basée sur le signal de détection délivré par le moyen de détection d'information de machine et les signaux vidéo délivrés par la caméra de surveillance, **caractérisé par** :
un moyen de commande d'affichage d'image pour afficher l'information d'image périphérique sous la forme d'une image sur le moniteur (13) pendant un temps choisi prédéterminé après que le signal d'instruction de départ est délivré par le dispositif d'instruction de démarrage de moteur principal (16) ; et
un moyen de retard de démarrage de moteur principal pour retarder le démarrage du moteur principal (8) pendant le temps choisi.

2. Engin de chantier selon la revendication 1, dans lequel :
le moyen de commande d'affichage d'image comprend un moyen de commutation d'image (22) pour faire passer une image du moniteur (13) à l'image de l'information d'image périphérique d'après le signal d'instruction de démarrage délivré par le dispositif d'instruction de démarrage de moteur principal (16) ; et
le moyen de retard de démarrage de moteur principal comprend :
un moyen de stockage (19) pour mémoriser le temps choisi au préalable,
un moyen de détermination de temps d'affichage d'image (23) pour déterminer si un temps d'affichage de l'image de l'information d'image périphérique affichée sur le moniteur a atteint le temps choisi mémorisé dans le moyen de stockage, et
un moyen de commande de démarrage de moteur principal (21) pour commander le moteur principal afin qu'il reste inapte à démarrer d'après le signal d'instruction de démarrage délivré par le dispositif d'instruction de démarrage de moteur principal (16) et commander pour permettre le démarrage du moteur principal quand il est déterminé que le temps d'affichage de l'image de l'information d'image périphérique sur le moniteur (13) a atteint le temps choisi mémorisé dans le moyen de stockage (19).

3. Engin de chantier selon la revendication 1 ou 2, comprenant une pelleteuse hydraulique.
